(19) Europäisches Patentamt
European Patent Office
Office européen des brevets

(11) Publication number: 0 009 662 B1

# (12) EUROPEAN PATENT SPECIFICATION

(45) Date of publication of patent specification: 16.11.83

(51) Int. Cl.³: G 06 K 15/10, B 41 J 3/02, B 41 B 27/28, G 09 G 1/02

(21) Application number: 79103348.3

(22) Date of filing: 07.09.79

## (54) Method and apparatus for storing and reconstructing chinese-like characters.

(30) Priority: 29.09.78 US 947097

(43) Date of publication of application: 16.04.80 Bulletin 80/8

(45) Publication of the grant of the patent: 16.11.83 Bulletin 83/46

(84) Designated Contracting States: DE FR GB

(56) References cited:
US - A - 3 665 450

IBM TECHNICAL DISCLOSURE BULLETIN, vol. 17, no. 7, December 1974, pages 2024-2027 New York, U.S.A. I.M. MILLER et al.: "Interactive Ideographic System"

(73) Proprietor: International Business Machines Corporation
Old Orchard Road
Armonk, N.Y. 10504 (US)

(72) Inventor: Yu, Wellington Chia-peir
1808 Schooldale Drive
San Jose California 95124 (US)

(74) Representative: Lewis, Alan John
IBM United Kingdom Patent Operations Hursley Park
Winchester, Hants, S021 2JN (GB)

EP 0 009 662 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

# Method and apparatus for storing and reconstructing chinese-like characters

The present invention relates to arrangements for storing sets of characters and like information for reconstruction by a related system, and more particularly to printers in which sets of characters are stored in a raster format for use by the printer in response to incoming signals identifying characters to be printed.

It is well known to provide one or more sets of characters in a printer arrangement in which incoming signals identify characters to be printed. The character sets perform a translation function by providing to the printer the appropriate raster patterns or other modulation bits in response to incoming commands to print particular characters so that the actual imaging apparatus of the printer can effect the physical printing of the characters.

A difficulty which commonly plagues printer systems is that of storage capacity for the character sets. Depending upon printer resolution and other factors a large number of bits may have to be stored for each character. If the additional requirement for storing several different sets of characters is imposed, an even greater storage burden is placed upon the system. Moreover, certain types of characters such as Chinese characters are relatively complex and typically require relatively large storage capacities, particularly if enough data is to be stored to provide for printed characters of high resolution.

Various techniques have been employed in an attempt to reduce the storage capacity required in various printer systems. A common technique is to compress the bit stream for purposes of storage of the characters with the compressed data being thereafter decompressed prior to use. An example of compression is provided by U.S. Patent 3,987,412 of Thomas Harvey Morrin. The arrangement shown in the Morrin patent provides compression by virtue of the format the data is presented in for purposes of printing. Morin discloses a border-following scheme in which as each dot of a character is printed the printer then vectors directly to the nearest dot which is the next to be printed.

Arrangements such as that described in the Morin patent are generally useful in reducing the required storage space in printers having various different types of characters and character sets. Over and above those considerations, it is desirable to further save on storage space where complex characters are used. This is particularly true, for example, in the case of Chinese characters and like oriental characters which tend to be relatively complex in terms of the bit patterns that must be stored to print them. The problem is particularly severe where high resolution requirements are imposed.

One example of an arrangement for reducing the storage capacity required by oriental characters is provided by Hasegawa in Japanese Patent Application Publication No. 49/129947 and is entitled "Character Generating System". Hasegawa describes a system for composing characters by combining certain elementary symbols in different relative positions and in different proportions. While such arrangement provides certain advantages, it has been found that problems frequently arise in determining the exact positions of the stored symbols and the proportional sizes thereof during the printing process. Further examples are provided by U.S. Patent 3,852,720, and U.S. Patent 3,999,167 of Ito et al.

While arrangements of the prior art have recognized that the storage capacity can be reduced in the case of Chinese or like oriental characters by dividing the characters into components for purposes of storage with the components later being combine during the printing process, they have created various other problems, particularly in the manner in which the character components must be recombined if reasonable resolution is to be achieved.

At page 2024/7 of the IBM Technical Disclosure Bulletin, Vol. 17, No. 7 December 1974 an article by I. M. Miller et al, describes an interactive ideographic system. The Miller system is based on the principles that each component shape—referred to as a radical component—has an individual radical key for operator entry of the component. The Miller system has a second set of keys—referred to as structural keys—which graphically represent the format of the character. By selecting the appropriate structural key and the appropriate radical keys, the format and components of a character can be entered into the Miller system. By data processing techniques the selected character is displayed.

The Applicants have appreciated that there is a need for a writing system for Kanji and other Chinese-like characters in which the characters are operator entered into the system rather than the component parts. This simplifies the keyboard in that less skill is needed in entering data in that the sequence of writing the components of a character need not be known to the operator.

It is therefore an object of the Applicants invention to provide an improved writing system for Chinese-like characters. In particular the system reduces the amount of storage required.

Methods and apparatus in accordance with the invention divide Chinese or similar characters into several component parts, at least one of which is found in other characters. This enables many characters to be printed by storing a relatively small number of components.

The components are made equal in size in at least one dimension such as height so that the information stored therewith and identifying the locations of the components within the standard height character cells for the various characters is relatively simple. A character can be reconstructed such as for printing simply by superimposing the components with proper spacing thereof relative to the standard height character cell using a logical OR circuit.

Accordingly the invention provides a machine implementable method for writing selected characters from an alphabet of Chinese-like composite characters in response to commands designating characters, said method comprising establishing a set of component shapes, each being common to a plurality of the selected characters and from which set the selected composite characters can be constructed, establishing data representing locations for the component shapes within a rectangular write space to be occupied by each written character, supplying the component shapes and location data for each designated character to be written to a write-control-means, and writing the characters under the control of the write-control-means within the respective write spaces, said method being characterised by storing the component shapes as a first set of data entries, the data entry for each component shape representing the component shape within a rectangular area having a first side dimensional equal to a first side dimension of the write space and its second side dimension equal or less than the second side dimension of the write space, by storing the location data as a second set of data entries, the location data entry for each character representing the spacings of the said first sides of the areas containing the component shapes of the character from the said first side of the character write space, and before writing one designated character, by logically combining the data representing the component shapes of said character in accordance with the respective location data.

The invention includes apparatus for carrying out the foregoing method, said apparatus responding to commands designating character by identifying the designated characters to a data processing means controlling a writing device, and said apparatus being characterised in that the data processing means comprise a first store storing a first set of data comprising a data entry for each component shape of a set of component shapes from which selected characters from an alphabet of Chinese-like characters can be constructed, each data entry representing its component shape within a rectangular area having a first side dimension equal to a first side dimension of a rectangular print space in which the character is to be written: a second store storing a second set of data comprising a location data entry for each character, each location data entry representing the spacings of the said first sides of the rectangular areas containing the component shapes of the character from the said first side of the write space; means for accessing from the first and second store, in response to the command designating each character to be written, the data entries for the component shapes of and the location data entry for, the designated character; and means for controlling the writing device in accordance with the accessed data entries.

The invention will now be more particularly described by referring to the best mode for carrying out the invention and with reference to the accompanying drawings in which:

Figs 1 to 5 are five different examples of groups of Chinese characters and the manner in which the characters of the groups are divided into components in accordance with the invention;

Fig. 6 is a representation of the two components of a particular character within a standard character cell indicating the manner in which the location of the components within the cell can be identified;

Fig. 7 is a diagrammatic illustration of the basic method in accordance with the invention;

Figs. 8 to 10 illustrate in detailed fashion the manner in which two components of a particular character are combined to reconstruct the character in accordance with the invention;

Fig. 11 illustrates a particular character in terms of three different techniques in accordance with the invention for storing and recombining the components of the character;

Fig. 12 is a block diagram of a preferred circuit in accordance with the invention;

Fig. 13 is a block diagram of an alternative memory arrangement for use with the circuit of Fig. 12; and

Fig. 14 is a detailed block diagram of the circuit of Fig. 12.

Figures 1 to 5 provide five different examples of groups of Chinese characters which can be stored for subsequent reconstruction by breaking into plural components, at least one of which is found in other characters. The example of Figure 1 depicts five different characters the righthand portion of each of which comprises the same symbol. This symbol can therefore be used as the A component of each character. The other component of each character, designated the B component, is shown thereunder. While all of the A components are alike, all of the B components are different.

The present invention recognizes that certain characters such as Chinese language characters have repetitious components. By dividing each character into two or more components for purposes of data storage, it becomes possible to store a given component only once even though it may occur repeatedly in different characters so long as information

with respect to the location of the component in each of the characters is available.

The data storage problems involved in a typical system can be appreciated when it is considered that about 9000 different Chinese Kanji characters may be required to be stored. In systems where each character is contained within a standard character cell occupying a space of 32 pels (bits) by 32 pels (bits), approximately 10 megabit of storage is required. If the complete set of characters is to be available in three different sizes as is often required, then approximately 30 megabits of storage capacity is required.

Typical prior art systems have attempted to reduce the storage requirements for Chinese characters by dividing the characters into common components. The difficulty with this approach lies not only in the substantial amount of information which must be available to define the location of each component when the character is reconstructed but also in the fact that even when such positioning information is accurate the quality and resolution of the resulting character is often unsatisfactory. In some systems of this type the sizes of the stored character components must be varied during the reconstruction process, thereby creating proportionality problems.

The present invention eliminates such problems by dividing each character into a few components which are of like size in at least one dimension. The components are full size in the sense that they extend across the entire character cell in that dimension, thereby eliminating the need to alter the size or to precisely define the location of the component during reconstruction of the character. Instead it is only necessary to specify the position of the component in one direction. Specifically, each of the character components in the present example are equal in height and comprise the entire height of the character cell. Therefore, it only becomes necessary to store information defining the placement of each component along the width of the character relative to the reference or lefthand vertical edge of the character cell.

The present invention involves the observation that 5870 characters out of a set of 9000 Chinese Kanji characters can be stored and reconstructed using 1610 components. The 1610 components require about 1460 character cells of storage area. Another 800 characters out of the set of 9000 can share parts and can therefore be stored in about 600 character cells of storage area. Still another 1830 characters out of the set of 9000 can be stored and reconstructed by slicing the character horizontally so as to divide it into top and bottom components which require 960 character cells of storage area. Only about 500 characters out of the set of 9000 must be stored as they are with each character requiring a full character cell of storage area. Therefore, instead of requiring 9000 character cells of storage area, the alphabet of 9000 Chinese Kanji characters requires 3520 character cells of storage space, thereby reducing the required storage area by a factor of 2.55. As discussed hereafter the storage area requirements can be even further reduced using various compression techniques.

Figure 2 provides another example of five different Chinese characters having a common component. In this example the common component is comprised of both extreme lefthand and extreme righthand portions of each character. The relatively small component in the centre of each character and which differs from character to character comprises the B component.

In the example of Figure 3, three different characters are shown. These characters are quite similar except for very minor variations which comprise the B component. In this example the A component is identical to the first character so that no B component is needed to store the first character. In the case of the other two characters the B component comprises a very small addition to the A component as shown.

In the example of Figure 4 the four different characters shown have a common A component consisting of the extreme lefthand and the extreme uppermost portions of each character. The remaining portions comprise the B components as shown.

The five characters shown in the example of Figure 5 are like those of Figure 2 in that the common A component comprises the extreme lefthand portion and the extreme righthand portion of each character. The central portion of each character comprises the B component.

In accordance with the invention the various different groups of characters in the examples of Figures 1 to 5 are stored by storing one of the A components which are alike and each of the B components which are different. Stored together with each component is information as to the position of the component within each character in which it appears. Because in the present example the components are positioned with reference to the lefthand margin of the character cell the position information indicates the spacing of each component from the lefthand margin. This is a convenient way of referencing in a system where the reconstructed characters are printed by a raster printer which scans from left to right. In each of the examples of Figures 1 to 5 the A component begins at the lefthand margin of the character cell and therefore no separate information need be stored to indicate the positions of the A components within the various characters shown. Accordingly, only the B components require information as to the spacing thereof from the lefthand margin of the character cell.

Figure 6 depicts a standard character cell 10 containing a character 12 which is comprised of

an A component 14 and a B component 16. For purposes of identification the A component 14 is hatched or shaded in one direction and the B component 16 is shaded or hatched in another direction. It will be seen that both the A component 14 and the B component 16 have heights equal to the height H of the character cell 10. The width of the A component 14 is designated $W_A$ and the width of the B component 16 is designated $W_B$. The lateral positioning of the components 14 and 16 across the width W of the character cell 10 is referenced relative to a reference or lefthand vertical margin 18 of the character cell 10. The lefthand margin 18 is conveniently chosen since raster printing typically takes place from left to right. The A component 14 begins a distance $d_1$ from the margin 18. The B component 16 begins at a location spaced to the right of the margin 18 by distances $d_1$, $W_A$ and $d_2$. Thus $d_2$ represents the spacing between the components 14 and 16.

In storing the A component 14 it is only necessary that the raster bits comprising the shaded portion shown in the lefthand portion of Figure 6 be stored. Consequently the storage space required by the A component is considerably less than half the space required by a complete character cell 10. In like fashion only the shaded portion of the centre and righthand portion of Figure 6 need be stored as the B component 16. Accordingly, the storage space required by the B component in the example of Figure 6 is more than half but still less than all of the space defined by the character cell 10. What is important is the fact that the various components of the different characters such as the A component 14 and the B component 16 repeat for various different characters, yet need only be stored once together with information representing $d_1$, $W_A$ and $d_2$ for each character in which the components appear.

The manner in which the various A and B components are stored and processed to reconstruct the characters is illustrated in Figure 7. Figure 7 depicts an arrangement which includes a raster pattern memory 24, a logical operation 26 and a character buffer measuring n bits by n bits. The raster pattern memory includes a first set of data 30 comprising the A and B components for the various Chinese characters. The memory 24 also includes a second set of data 32 comprising information representing $d_1$, $d_2$, $W_A$, and other information that may be necessary to define the locations of the various components within the cells of the various characters. The character buffer 28 comprises a storage buffer which may be the same size as the character cell 10.

When an external command is received to reconstruct a particular character, the system shown in Figure 7 begins by transferring the A component of the character from the memory 24 through the logical operation 26 to the character buffer 28. At the same time the position information in the form of $d_1$ for the A component is transferred from the second set of data 32 to the character buffer 28 to provide for proper spacing of the A component within a character cell in the character buffer 28. The A component is temporarily stored in the character buffer 28 until the B component can be transferred from the memory 24 to the logical operation 26. At that time the A component is transferred to the logical operation 26 where it is superimposed with the B component relative to the character cell by logically OR'ing the two components together. Positioning data in the form of $d_1+W_A+d_2$ defines the position of the B component within the character cell. The various raster bits comprising the superimposed A and B components within the character cell are then temporarily stored in the character buffer 28 to await the use by a printer or other character imaging device.

Thus, Figure 7 depicts a machine implementable method for the reconstruction of Chinese-like whole characters C in a designated alphabet in which the characters C are encoded as the code equivalent of selected members of a first stored set R of the dot matrix graphical components A and B and selected members of a second stored set D of displacement and width information comprised of $d_1$, $d_2$, $W_A$ and the like. The A and B components comprising stored set R are selected from those whole characters partitionable into two subcomponents at least one of which is common to a plurality of the whole character. Selected ones of the Chinese-like characters C may then be formed by logically combining members of the sets R and D such that:

$$C=R_1D_1\circledast R_2D_2$$

where $\circledast$ is a general Boolean logical operator, $R_1$ and $R_2$ (comprising the A and B components) are selected from the set R and $D_1$ and $D_2$ are selected from the set D.

Figures 8 to 10 comprise a detailed example of a particular character and the manner in which the components are superimposed to reconstruct the character. In the example of Figures 8 to 10 the character cell 10 measures 32 pels (bits) by 32 pels (bits) with the actual printing dots being shown in the different figures thereof.

Figure 8 depicts the A component which begins at the lefthand margin 18 and extends to the right through about a third of the width of the character cell 10. In this instance therefore the distance $d_1$ shown in Figure 6 is zero and no positioning information need be stored in the raster pattern memory for the A component as used in this particular character. The B component is depicted in Figure 9. It comprises approximately the right two-thirds of the character cell 10. Whereas in the example of Figure 6 the A and B components are separated by the distance $d_2$, in this example (Fig. 8 to 10) the B component overlaps the A component by a small amount as will be seen in Figure 10. Accordingly, the lefthand edge of the B component of Figure 9 as depicted by a dashed line 36 is a distance $d_3$ from the lefthand margin 18 of the character cell 10. It is therefore necessary to store a representation of the distance $d_3$ together with the B component in the raster pattern memory. Thus, the completed character shown in Figure 10 can be reconstructed using the arrangement shown in Figure 7 and the stored A and C components and the value $d_3$.

Figure 11 depicts three different ways in which the character components can be stored so as to identify the locations of the components within the character cells. Figure 11 depicts a character 40 within the character cell 10 and comprised of an A component 42 and a B component 44. A dashed line 46 extends through the character cell 10 and separates the A component 42 from the B component 44.

In a first storage technique illustrated in Figure 11 the entire lefthand portion of the character cell 10 including the A component 42 is stored as the A component. The information which is stored as the B component comprises the remainder of the character cell 10 but with the A component 42 being blanked out. Because the A component as stored begins at the lefthand margin 18 of the character cell 10, $d_1$ is 0 and no information identifying the location of the A component need be stored. Likewise, the B component begins at the lefthand margin 18 of the character cell 10, and no information as to the location of the B component need be stored. Upon reconstruction, the logical OR operation superimposes the B component on the A component to produce the complete character 40.

In the second storage technique of Figure 11 the stored A component is the same as in the first example. However, only that portion of the character cell 10 to the right of the dashed line 46 is stored as the B component. If a group of the characters can be conveniently divided into the two components using the same dashed line 46, then the distance of the B component from the lefthand margin 18 is a constant $d_c$. In addition to storing the A component and the B component as shown, it is only necessary to store the constant value $d_c$ and apply it each time a B component is being combined with an A component.

The third example depicted in Figure 11 corresponds to the technique described in connection with Figures 8 to 10. The A component 42 which comprises the entire height of the character cell 10 but only the portion of the width thereof necessary to encompass the component 42 is stored together with information indicating the distance $d_1$ from the lefthand margin 18 to the beginning of the A component 42. The portion of the character cell 10 stored as the B component comprises the full height of the cell 10 but only that portion of the width necessary to encompass the B component 44. This is stored together with the width $W_A$ of the A component and the distance $d_2$ from the end of the A component to the beginning of the B component. As previously described the character is reconstructed by positioning the A component within the character cell 10 using the distance $d_1$ and thereafter positioning the B component within the character cell 10 using $d_1$, $W_A$ and $d_2$.

In the absence of any compression of the stored data, the first example shown in Figure 11 is the most wasteful of storage space. The A component requires approximately half of a character cell of storage space, and the B component requires a complete character cell of storage space. By the same token the first example is the easiest in terms of positioning the components to reconstruct the character since it is not necessary to store or use information defining the locations of the components within the character cell. At the other extreme, the third example in Figure 11 minimizes the storage space required for non-compressed data since only those portions of the character cell necessary to encompass the width of the components are stored. By the same token, this technique is the most difficult to implement since it requires positioning information with respect to both components, which information is different for each different character.

The techniques shown in Figure 11 and variations thereof can be employed as dictated by storage requirements and also by the types of characters stored. Thus in the example of Figure 1, the A component would ideally begin a fixed distance from the lefthand margin for the characters shown with the B components beginning at the margin. Alternatively, the A component could begin a distance $d_2$ from the end of the B component. In the example of Figure 4 the A components would begin at the lefthand margin and the B components would begin a fixed distance from the margin. In the example of Figures 2, 3 and 5 the A components would fill the entire character cell with blank bits in the region of the B components as necessary. The B components could be set up to begin a fixed distance from the lefthand margin in most or all instances.

Figure 12 is a block diagram of an arrangement which may be used to carry out the invention. The apparatus shown in Figure 12 is essentially the same as and operates in essentially the same manner as apparatus shown and described in Belgium specification No. 867,592 (Belleson) French specification No. 2,395,840 and German specification No. 2,825,3216. The Belleson et al application describes a printer in which data representing characters to be printed and generated by a data processing unit is communicated over a main channel to the printer where it enters through a system adapter and passes through external registers to a microprocessor for storage. The micro-

processor executes microroutines in response to programs entered by the user via an auxiliary storage disk to convert the EBCDIC codes of the character-identifying data into pattern addresses and to generate control parameters for the printing operation. The pattern addresses locate character patterns previously provided by the microprocessor and stored in a raster pattern memory. The addressed character patterns within the raster pattern memory are advanced through a pattern shifter and a strip buffer under the control of a pattern move control which responds to control signals from the microprocessor via an interface. The pattern shifter is necessary in order to expand the 32 bit long scan lines at the input side thereof into 64 bit long scan lines at the output thereof in preparation for entry into the strip buffer which processes a pair of 32 bit words at a time. The scan lines as assembled by the strip buffer are then converted from parallel into serial format and are advanced to the print head of the imaging apparatus of the printer system.

The operation of the arrangement shown in Figure 12 is similar to that of the Belleson et al arrangement and includes a microprocessor interface 50 for coupling a pattern move control 52 to a microprocessor (not shown). The microprocessor provides control signal via the interface 50 to the control 52 as well as character patterns to a raster pattern memory 54. In the present example the raster pattern memory 54 does not store the full characters as such but instead stores the components of the characters together with information as to the location of the components within the character cell of each character. At the same time the microprocessor provides the pattern move control 52 with the information necessary to select the two components of each character identified by a pattern address from the micro-processor and to properly locate the components within a character cell. The selected components are transferred to a strip buffer 56 via a pattern shifter 58 which operates in the same manner as in the Belleson et al arrangement so as to shift 32 bit scan lines at the input thereof to selected positions within 64 bit scan lines at the output thereof. The output of the pattern shifter 58 is coupled through an OR gate 60 to the strip buffer 56.

In operation the pattern move control 52 responds to a pattern address by identifying the two components and the location information therefore for the character to be reconstructed. The A component is advanced under the control of the pattern move control 52 from the memory 54 through the pattern shifter 58 and the OR gate 60 to the strip buffer 56 where the A component is temporarily stored. Subequently the B component in the memory 54 is advanced through the pattern shifter 58 to the OR gate 60 where it is OR'ed with the A component fed to the OR gate 60 from the strip buffer 56 via a lead 62. The resulting character is stored in the strip buffer 56. The various scan lines within the strip buffer 56 are then converted from a parallel to a serial format and are applied to the print head within the imaging apparatus of the printer in the same manner as described in the Belleson et al application. Depending upon the size of the strip buffer 56 and the timing of operation of the system of the two components of each character may be OR'ed and the results thereof stored in the strip buffer 56 prior to the temporary storage of the A component of the next character in the strip buffer and the OR'ing thereof with the B component of the character, as just described. Alternatively, the A components of a plurality of characters may be successively transferred and stored in the strip buffer 56, following which each A component is then OR'ed with the corresponding B component, and the resulting character stored in the strip buffer 56.

As previously noted arrangements in accordance with the invention can effect a saving in required storage space by a factor of as much as 2.55 when compared with arrangements where each complete character is stored. The storage requirements of systems according to the invention can be even further reduced by employing any one of a number of conventional compression techniques in conjunction with the invention as illustrated in Figure 13. The arrangement of Figure 13 which replaces the raster pattern memory 54 of Figure 12 includes a compressed pattern memory 70, a decompressor 72, a data decompressor 74 and non-compressed character buffer 76. The compressed pattern memory 70 is similar to the raster pattern memory 54 except that it stores the character components in a compressed form. Each component is advanced to the pattern shifter 58 by first being decompressed in a decompressor 72 and a data decompressor 74 and then temporarily stored in the non-compressed character buffer 76.

An example of a compression-decompression technique which can be used in the arrangement of Figure 13 is described in the previously referred to U.S. patent 3,987,412 of Morrin. As previously noted Morrin discloses a border-following scheme in which as each dot of a character is printed the printer then vectors to the nearest dot which is the next to be printed. Consequently only information defining the character itself need be stored to the exclusion of blank spaces within and surrounding the character. Thus, the storage technique shown in the first example of Figure 7 is desirably employed in connection with a compression-decompression scheme such as of the Morrin type. As already discussed the first technique of Figure 7 does not require the storage and positioning information along with the components since each component begins at the lefthand margin 18 of the character cell 10. By the same token data representing the relatively large amount of blank space surrounding

and within the components need not be stored since in a compression-decompression technique of the Morrin type only data representing the actual printed components is stored. Consequently positioning information with respect to the components is included in the recorded components themselves and the required storage space for each character is minimal.

The circuit of Figure 12 is shown in considerably greater detail in Figure 14, particularly with respect to the pattern move control 52. Initially, the addresses of the various A and B components to be stored in the raster pattern memory 54 are communicated to the memory from the microprocessor interface 50 via a source location register 90, a write address register 92 and a storage address register 94. The source location register 90 serves to store the addressing information identifying desired storage locations within the memory 54. When the components are being stored within the memory 54, each address temporarily stored in the source location register 90 is transferred and stored in the write address register 92 from which it is communicated to the storage address register 94 to select the desired location within the memory 54 for storage at the related component. The write address register 92 is incremented by a circuit 96 at the end of each 32 bit line with the address for the next line being updated in the storage address register 94. Thereafter, as various pairs of the components are selected to reconstruct characters the addressing information is temporarily stored in a read address register 98 for subsequent loading into the storage address register 94 on a line by line basis, as incremented by the circuit 96, to provide accessing of the memory 54.

The pattern shifter is controlled by a shift amount register 100 and buffer register 102. As previously noted the pattern shifter 58 has the capability of shifting each incoming 32 bit line within a 64 bit space. The microprocessor interface 50 provides to the shift amount register 100 a signal representing the amount of shift of each 32 bit line in the pattern shifter 58. Such signals are temporarily stored in the buffer register 102 and are applied to the pattern shifter 58 to provide the required amount of shift.

The output of the pattern shifter 58 is coupled via a write register 59 to the OR circuit 60. The OR circuit 60 which has the feedback loop 62 providing a second input thereto is coupled to the strip buffer 56.

The microprocessor interface 50 identifies the starting point of each character cell on a given page relative to an X, Y coordinate system and provides the X value to a horizontal information register 104 and the Y value to a vertical information register 106. Each X value is transferred to an X position register 108, and each Y value is transferred to a Y position register 110. The X value is incremented by a circuit 112 to shift back and fourth between the first 32 bit positions and the second 32 bit positions in each 64 bit line from the pattern shifter 58. The output of the X position register 108 is coupled directly to an X position storage address register 2 118 and via the circuit 112 to an X position storage address register 1 116. The registers 116 and 118 alternately address the two different portions of each 64 bit line as the strip buffer 56 is loaded with each new line. The Y position register 110 is provided to a Y position storage address register 120 for proper positioning of data within the strip buffer 56. The output of the Y position register 110 is also incremented by a circuit 114 so as to identify the different 64 bit lines as they are loaded in the strip buffer 56.

A mode register 122 responds to signals from the microprocessor interface 50 to indicate employment of either a character mode or an image mode for deriving and storing the data in the strip buffer 56. In the character mode a sequence of up to 64 lines, each having a width of either 32 bits or 16 bits, is assembled in the strip buffer 56. In such instances X remains the same and Y changes with each new line. The Y information is provided to a height information and repeating factor register 126 which is incremented downward by a circuit 128. The register 126 coordinates with the Y position register 110 to identify the Y position of each 16 or 32 bit line.

When the mode register 122 indicates that the image mode is to be used, each image or image portion is comprised of a selected number of lines which are equal in length to some multiple of 32 bits. In such instances the height information and repeating factor register 126 stores information indicating how many times each group of 32 bits is to be repeated to form a line. A width information register 124 which stores information indicating the number of bits per line up to a total of 32 and which coordinates the operation of the X position register 108 stores the maximum value 32. Accordingly, the X position register 108 is incremented with each 32 bits while the Y position register 110 stores the same value until the line is finished.

The description thus far has been in terms of characters divided vertically into components of equal height accompanied by information as to their location across the width of the character cell. However, a few characters are more easily divided horizontally into components of equal width. In such cases the positioning information stored with the components identifies the positions of the components relative to the height of the character cell and the top horizontal edge of the character becomes the reference margin.

**Claims**

1. A machine implementable method for

writing selected characters from an alphabet of Chinese-like composite characters in response to commands designating characters, said method comprising establishing a set of component shapes, each being common to a plurality of the selected characters and from which set the selected composite characters can be constructed, establishing data representing locations for the component shapes within a rectangular write space to be occupied by each written character, supplying the component shapes and location data for each designated character to be written to a write-control-means, and writing the characters under the control of the write-control-means within the respective write spaces, said method being characterised by storing the component shapes as a first set of data entries, the data entry for each component shape representing the component shape within a rectangular area having a first side dimension equal to a first side dimension of the write space and its second side dimension equal or less than the second side dimension of the write space, by storing the location data as a second set of data entries, the location data entry for each character representing the spacings of the said first sides of the areas containing the component shapes of the character from the said first side of the character write space, and, before writing one designated character, by logically combining the data representing the component shapes of said character in accordance with the respective location data.

2. A method as claimed in claim 1, further characterised by establishing the set of component shapes so that no more than two component parts are stored for each character.

3. A method as claimed in claim 1 or 2, further characterised by using the left vertical side of the write space as the said one side of that space so that the characters all have the same vertical height.

4. A method as claimed in claim 1, 2 or 3, further characterised in that in at least some of the selected characters, the location data therefor permits some overlapping of the rectangular areas containing the component shapes.

5. A method as claimed in any one of claims 1 to 4, further characterised in that in response to an external command to reconstruct a complete character, the data entries for the component shapes of and location data entry for, the designated character are accessed from storage for supply to the write-control-means.

6. A method as claimed in claim 5, further characterised by transferring the data entries of the component shapes of the character to be written to a temporary storage, the temporary storage defining the write space for the character; and by positioning the data entries in the temporary storage in accordance with the accessed location data entry for the character.

7. Apparatus for carrying out a method as claimed in any one of claims 1 to 6, said apparatus responding to commands designating characters by identifying the designated characters to a data processing means controlling a writing device, and said apparatus being characterised in that the data processing means comprise a first store (30, Fig. 7; 54, Fig. 13) storing a first set of data comprising a data entry for each component shape of a set of component shapes from which selected characters from an alphabet of Chinese-like characters can be constructed, each data entry representing its component shape within a rectangular area having a first side dimension equal to a first side dimension of a rectangular print space in which the character is to be written; a second store (32, Fig. 7; 54, Fig. 13) storing a second set of data comprising a location data entry for each character, each location data entry representing the spacings of the said first sides of the rectangular areas containing the component shapes of the character from the said first side of the write space; means (52, Fig. 13) for accessing from the first and second store (54), in response to the command designating each character to be written, the data entries for the component shapes of and the location data entry for, the designated character; and means (56) for controlling the writing device in accordance with the accessed data entries.

8. Apparatus as claimed in claim 7, further characterised in that the controlling means comprise logical OR'ing means (60) for combining electrical representations of the accessed data entries.

**Patentansprüche**

1. Maschinell durchführbares Verfahren zum Schreiben von ausgewählten Zeichen eines dem chinesischen ähnlichen Alphabets von zusammengesetzten Zeichen auf Grund von Befehlen, welche Zeichen angeben, wobei das Verfahren beinhaltet: die Erstellung eines Satzes von Teilformen, wobei jede Teilform gemeinschaftlich ist für eine Vielzahl der ausgewählten Zeichen und aus dem Satz von Teilformen die ausgewählten zusammengesetzten Zeichen aufgebaut werden können; Bereitstellen von Daten darstellenden Stellen für die Teilformen innerhalb eines rechteckigen Schreibraumes, der von jedem Zeichen eingenommen werden soll; Liefern der Teilformen und Stellenangaben für jedes angegebene Zeichen, das geschrieben werden soll, zu einer Schreibsteuerung und Schreiben der Zeichen unter der Steuerung der Schreibsteuerung innerhalb des betreffenden Schreibraumes, welches Verfahren gekennzeichnet, ist durch die Speicherung der Teilformen als einen ersten Satz von Dateneintragungen, wobei die Dateneintragung für jede Teilform die Teilform innerhalb des rechteckigen Bereiches darstellt, die eine erste Seitendimension aufweist, die gleich ist zu einer ersten Seitendimension des

Schreibraumes und deren zweite Seitendimension gleich oder kleiner ist als die zweite Seitendimension des Schreibraumes, durch Speicherung der Stellendaten als einen zweiten Satz von Dateneintragungen, wobei die Stellendateneintragungen für jedes Zeichen den Zwischenraum zwischen den ersten Seiten der Gebiete, welche die Teilformen des Zeichens enthalten, und der genannten ersten Seite des Zeichenschreibraumes angeben, und dadurch, daß vor dem Schreiben eines angegebenen Zeichens die Daten, welche die Teilformen des Zeichens in Übereinstimmung mit den betreffenden Stellendaten angeben, logisch kombiniert werden.

2. Verfahren nach Anspruch 1, dadurch gekennzeichnet, daß der Satz von Teilformen so erstellt wird, daß nicht mehr als zwei Teilformen für jedes Zeichen gespeichert werden.

3. Verfahren nach den Ansprüchen 1 oder 2, gekennzeichnet, durch die Verwendung der linken vertikalen Seite des Schreibraumes als die genannte eine Seite des Raumes, so daß die Zeichen alle dieselbe vertikale Höhe aufweisen.

4. Verfahren nach einem der vorhergehenden Ansprüche, dadurch gekennzeichnet, daß zumindest für einige ausgewählte Zeichen die dazugehörigen Stellendaten eine gewisse Überlappung des rechteckigen Bereiches mit den Teilformen gestatten.

5. Verfahren nach einem der vorhergehenden Ansprüche, dadurch gekennzeichnet, daß auf einen externen Befehl hin ein vollständiges Zeichen zu konstruieren, die Dateneintragungen für die Teilformen für das angegebene Zeichen und die Stellendaten hierfür aus dem Speicher geholt und zur Schreibsteuerung weitergegeben werden.

6. Verfahren nach Anspruch 5, dadurch gekennzeichnet, daß die Dateneintragungen der Teilformen des Zeichens, das geschrieben werden soll, zur vorübergehenden Speicherung übertragen werden, wobei der betreffende Speicher den Schreibraum für das Zeichen bestimmt, und dadurch, daß die Dateneintragungen im zeitweiligen Speicher in Übereinstimmung mit den ausgelesenen Stellendateneintragungen für dieses Zeichen angeordnet werden.

7. Anordnung zur Ausführung des Verfahrens nach einem der vorhergehenden Ansprüche 1 bis 6, wobei die Anordnung auf Befehle anspricht, welche Zeichen angeben, indem diese Zeichen für eine Datenverarbeitungseinrichtung identifiziert werden, wobei eine Schreibeinrichtung gesteuert wird und wobei die Einrichtung dadurch gekennzeichnet ist, daß die Datenverarabeitungseinrichtung einen ersten Speicher (30, Fig. 7; 54, Fig. 13) aufweist zur Speicherung eines ersten Satzes von Daten, welche eine Dateneintragung fur jede Teilform eines Satzes von Teilformen, aus denen ausgewählte Zeichen aus einem dem chinesischen ähnlichen Alphabet zusammengesetzt werden können, aufweist, wobei jede Dateneintragung ihre Teilform innerhalb eines rechteckigen Bereiches mit einer ersten Seitendimension, welche zue einer ersten Seitendimension des rechteckigen Schreibraumes, in dem das Zeichen geschrieben werden soll, gleich ist, darstellt; ferner einen zweiten Speicher (32, Fig. 7; 54, Fig. 13), in dem ein zweiter Satz von Daten gespeichert ist, mit einer Stellendateneintragung für jedes Zeichen, wobei jede Stellendateneintragung den Zwischenraum darstellt zwischen den ersten Seiten des rechteckigen Bereiches, der die Teilformen des Zeichens aufweist und der genannten ersten Seite des Schreibraumes; ferner Mittel (52, Fig. 13) zum Zugriff zum ersten und zweiten Speicher (54) in Beantwortung eines Befehles, der ein zu schreibendes Zeichen angibt, zum Auslesen der Dateneintragungen für die Teilformen von und dem angegebenen die Stellendaten für das angegebene Zeichen, sowie Mittel (56) zur Steuerung der Schreibeinrichtung gemäß den ausgelesenen Dateneintragungen.

8. Anordnung nach Anspruch 7, dadurch gekennzeichnet, daß das Steuermittel logische ODER-Einrichtungen (60) zur Kombination von elektrischen Darstellungsformen der ausgelesenen Dateneintragungen aufweisen.

**Revendications**

1. Méthode pouvant être mise en oeuvre par une machine pour écrire des caractères sélectionnés à partir d'un alphabet de caractères composés du genre chinois, en réponse à des signaux de commande indiquant des caractères, ladite méthode comprenant l'établissement d'un ensemble de formes composantes, chaque forme étant commune à une pluralité de caractères sélectionnés, à partir duquel les caractères composés sélectionnés peuvent être construits, l'établissement de données représentant des positions pour les formes composantes à l'intérieur d'un espace d'écriture rectangulaire à occuper par chaque caractère écrit, l'application des formes composantes et des données de position pour chaque caractère indiqué à écrire, à un moyen de commande d'écriture et l'écriture des caractères sous la commande du moyen de commande d'écriture à l'intérieur des espaces d'écriture respectifs, ladite méthode étant caractérisée par l'emmagasinage des formes composantes comme un premier ensemble d'entrées de données, l'entrée de données pour chaque forme composante représentant la forme composante à l'intérieur d'une zone rectangulaire présentant une première dimension latérale égale à une première dimension latérale de l'espace d'ecriture et une deuxième dimension latérale égale ou inférieure à la deuxième dimension latérale de l'espace d'écriture, par l'emmagasinage des données de position comme un deuxième ensemble d'entrées de données, l'entrée des données, de

position pour chaque caractère représentant les espacements desdits premiers côtés des zones contenant les formes composantes du caractère par rapport audi premier côté de l'espace d'écriture des caractères, et, avant l'écriture d'un caractère indique, par la combinaison logique des données représentant les formes composantes dudit caractére selon les données de position respectives.

2. Méthode selon la revendication 1, caractérisé en outre par l'établissement de l'ensemble des formes composantes de façon que les parties composantes emmagasinées pour chaque charactère soient au maximum au nombre de deux.

3. Méthode selon la revendication 1 ou 2, caractérisé en outre par l'utlisation du côté verticale gauche de l'espace d'écriture comme ledit premier côté de cet espace de façon que les caractères aient tous la même hauteur verticale.

4. Méthode selon la revendication 1, 2 ou 3, caractérisée en outre en ce que dans au moins certains des caractères sélectionnées, les données de position pour ceux-ci permettent un certain chevauchement des zones rectangulaires contenant les formes composantes.

5. Méthode selon l'une quelconque des revendications 1 à 4, caractérisée en outre en ce que, en réponse à un signal de commande extérieur pour reconstruire un caractère complet, les entrées de données pour les formes composantes du caractère indiqué ainsi que l'entrée des données de position pour celui-ci, sont accédées en mémoire pour être appliqués aux moyens de commande d'écriture.

6. Méthode selon la revendication 5 caractérisée en outre par le transfert des entrées de données des formes composantes du caractére à écrire, dans une mémoire temporaire, la mémore temporaire définissant l'espace d'écriture pour le caractère, et par le placement des entrées de données dans la mémoire temporaire selon l'entrée des données de position accédée pour le caractère.

7. Dispositif pour exécuter une méthode selon l'une quelconque des revendications 1 à 6, ledit dispositif répondant à des signaux de commande indiquant des caractères par l'identification des caractères indiqués à un moyen de traitement de données commandant un dispositif d'écriture, ledit dispositif étant caractérisé en ce que le moyen de traitement de données comprend une première mémoire (30, figure 7; 54, figure 13) emmagasinant un premier ensemble de données comprenant une entrée de données pour chaque forme composante d'une ensemble de formes composantes à partir duquel des caractères sélectionnées d'un alphabet de caractères du type chinois, peuvent être construits, chaque entrée de données représentant sa forme composante à l'intérieur d'une zone rectangulaire ayant une premièrre dimension latérale égale à une première dimension latérale d'un espace d'impression rectangulaire dans lequel le caractère doit être écrit, une deuxième mémoire (32, figure 7; 54, figure 13) emmagasinant un deuxième ensemble de données comprenant une entrée de données de position pour chaque caractère, chaque entré de données de position représentant les espacements desdits premiers côtés des zones rectangulaires contenant les formes composantes du caractère par rapport audit premier côté de l'espace d'écriture, des moyens (52, figure 13) d'accession à partir des première et deuxième mémoires (54) en réponse au signal de commande indiquant chaque caractère à écrire, les entrées de données pour les formes composantes du caractère indiqué et l'entrée des données de position pour celui-ci, et des moyens (56) pour commander le dispositif d'écriture selon les entrées de données accédées.

8. Dispositif selon la revendication 7, caractérisé en outre en ce que les moyens de commande comprennent des moyens permettant d'effectuer un OU logique (60) pour combiner des représentations électriques des entrées de données accédées.

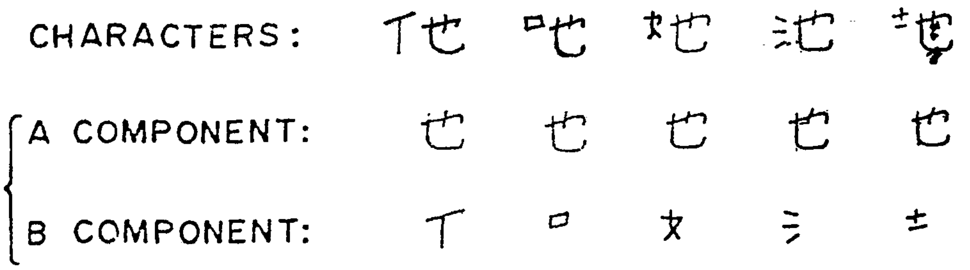


FIG. 1

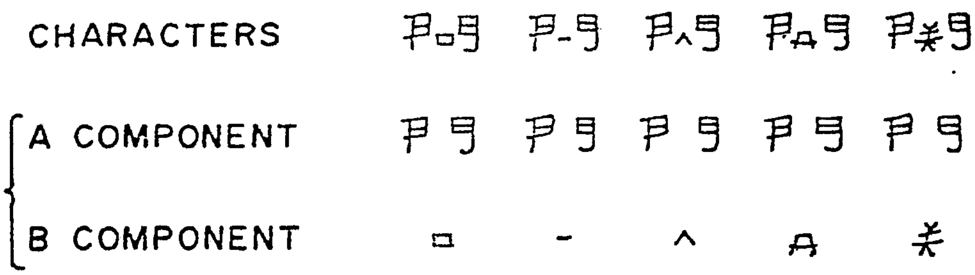


FIG. 2

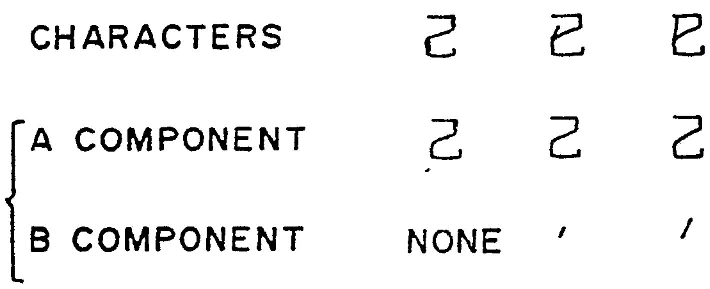


FIG. 3

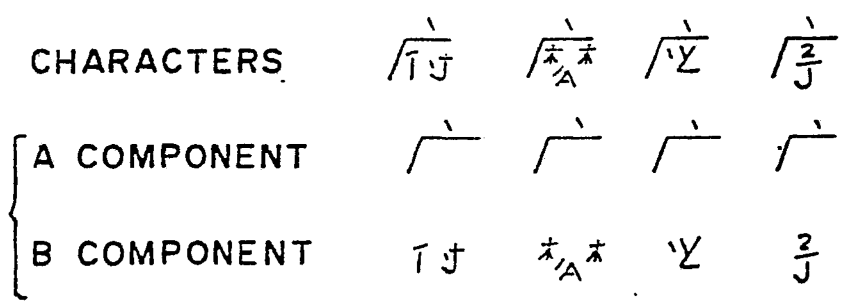


FIG. 4

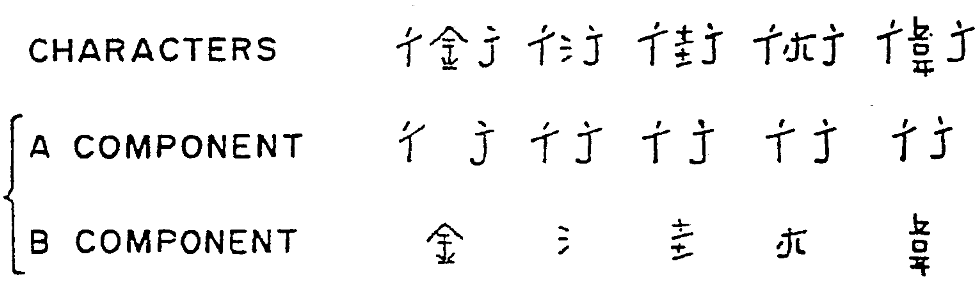


FIG. 5

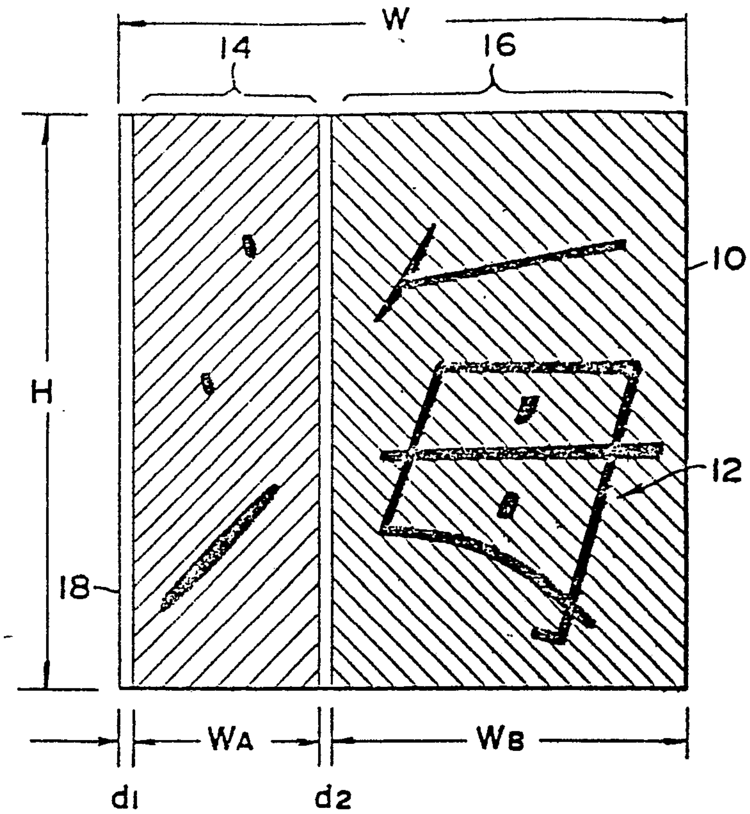
W
14
16
10
12
H
18
WA
WB
d1
d2

FIG. 6

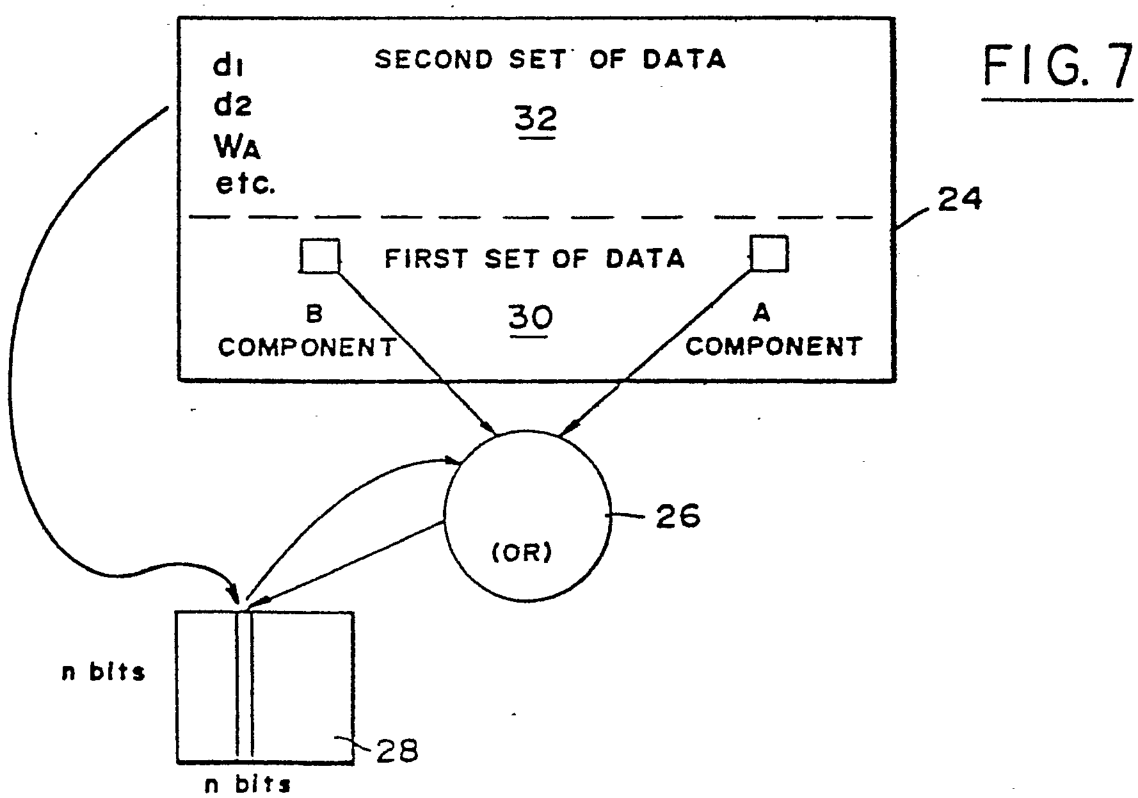
d1
d2
WA
etc.
SECOND SET OF DATA
32
24
FIRST SET OF DATA
B
COMPONENT
30
A
COMPONENT
(OR)
26
n bits
n bits
28

FIG. 7

FIG. 8

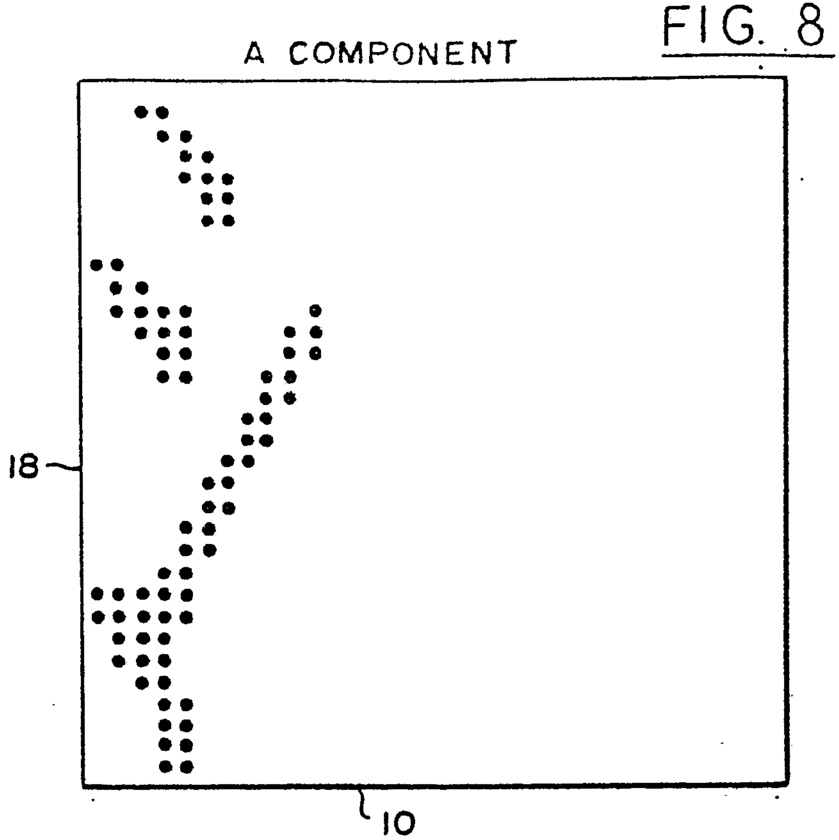


FIG. 9

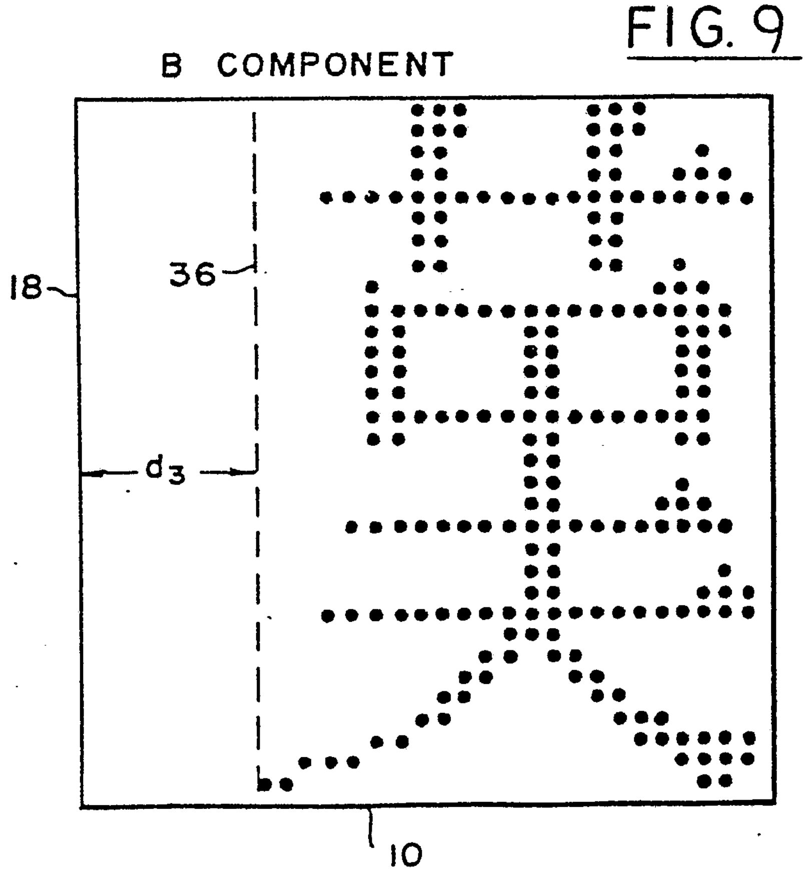

COMPLETED CHARACTER (A+B)

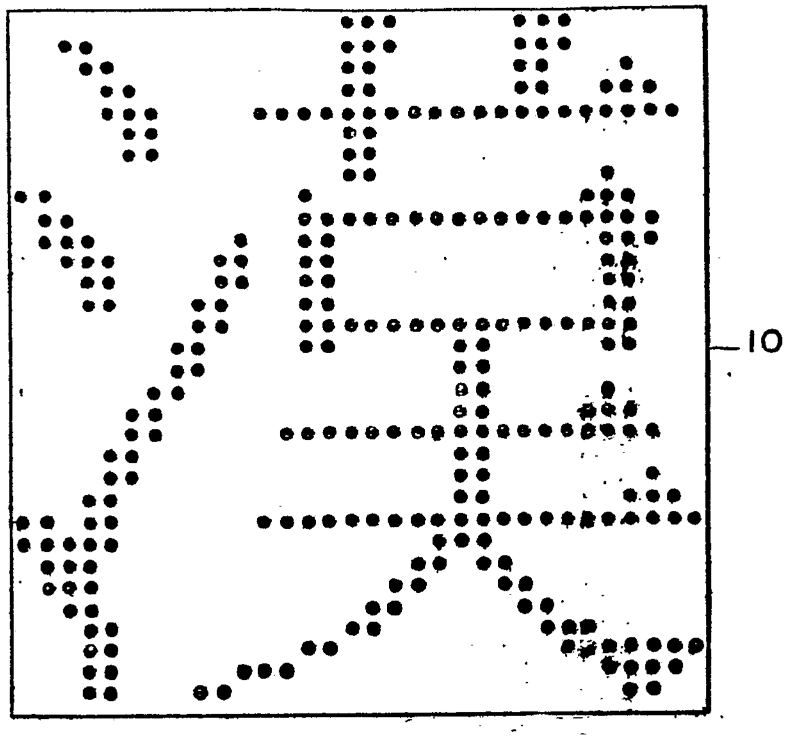


FIG. 10

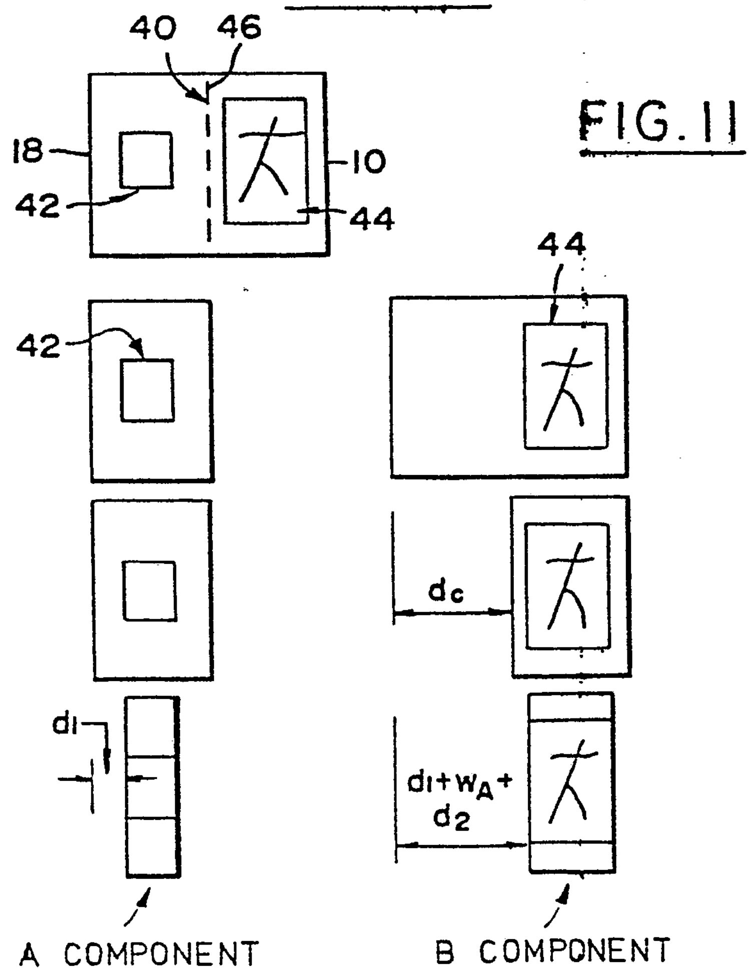


FIG. 11

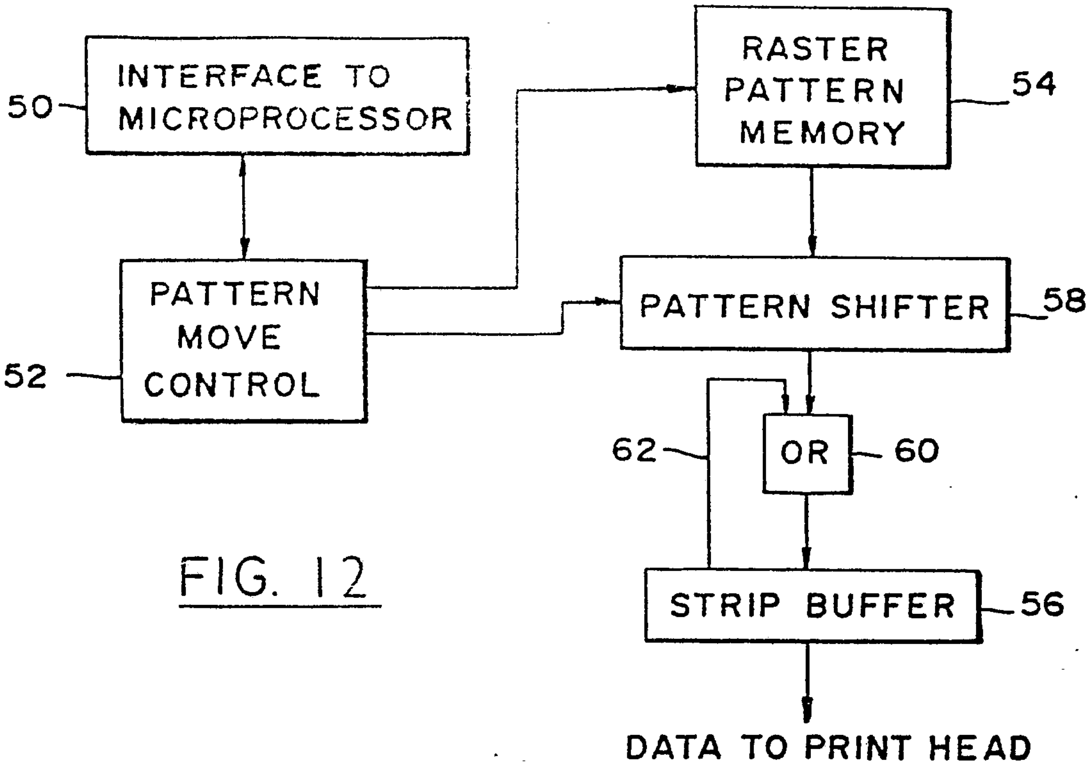

INTERFACE TO MICROPROCESSOR
50
RASTER PATTERN MEMORY
54
PATTERN MOVE CONTROL
52
PATTERN SHIFTER
58
OR
60
62
STRIP BUFFER
56
DATA TO PRINT HEAD


FIG. 12

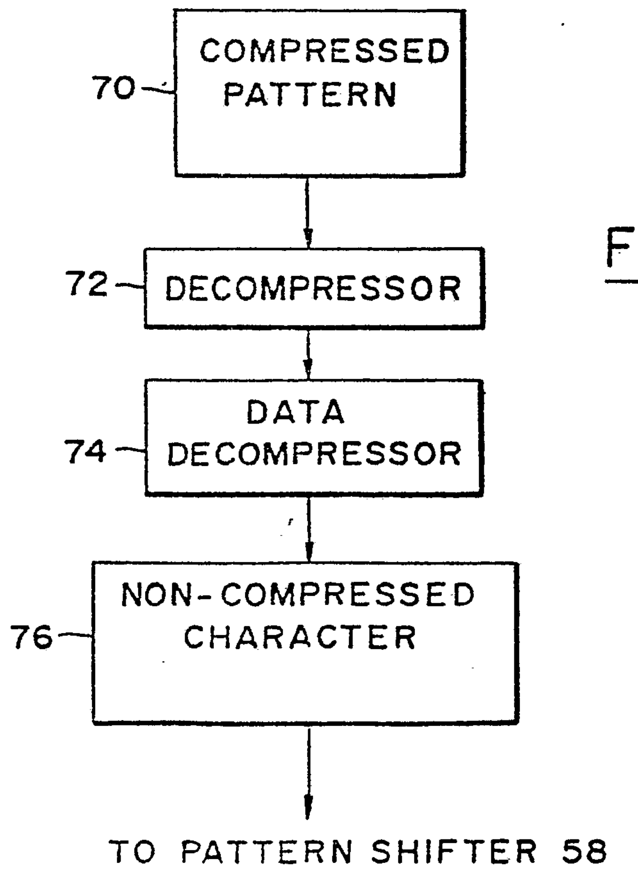

COMPRESSED PATTERN
70
DECOMPRESSOR
72
DATA DECOMPRESSOR
74
NON-COMPRESSED CHARACTER
76
TO PATTERN SHIFTER 58


FIG. 13

FIG.14

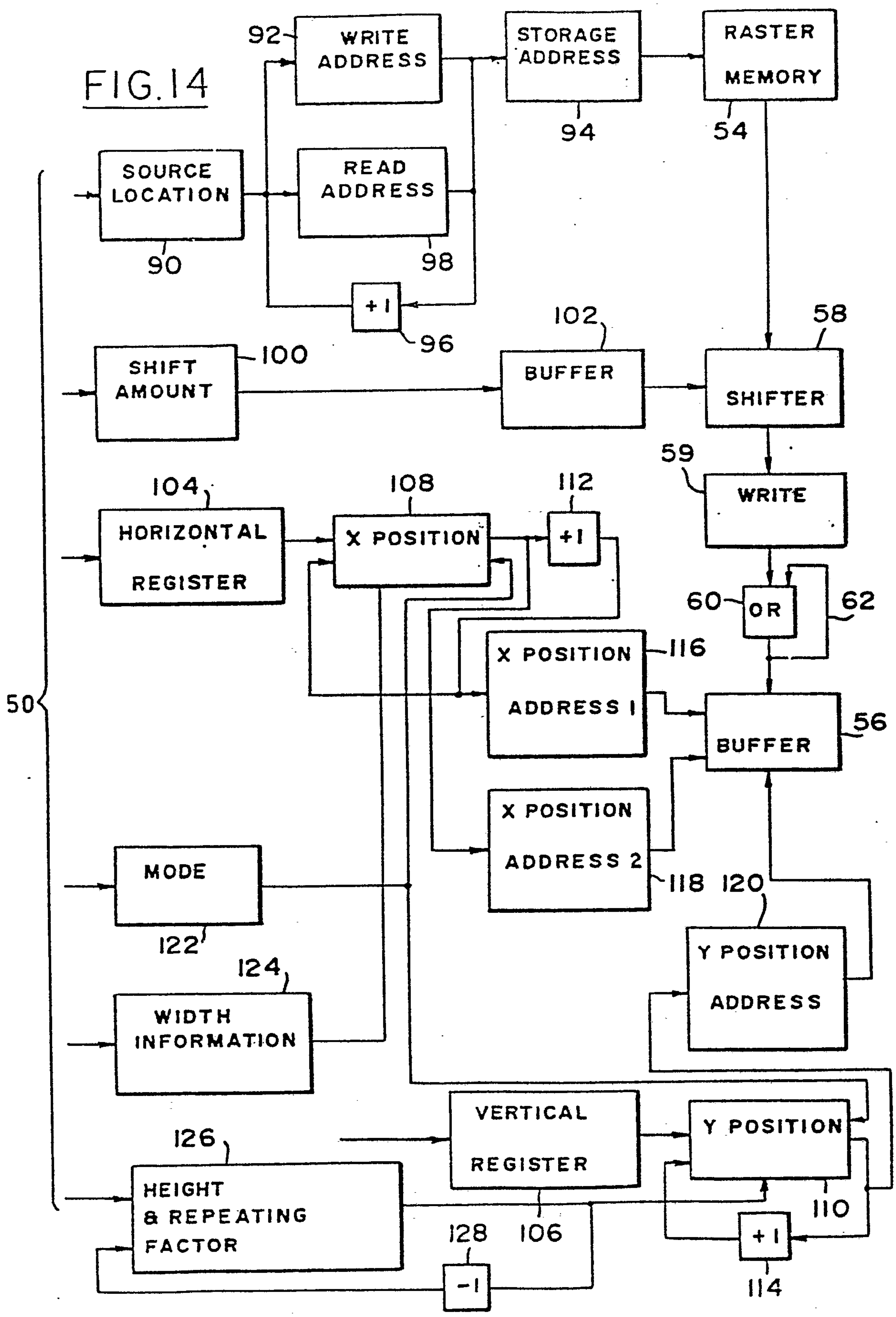
WRITE ADDRESS
92
STORAGE ADDRESS
94
RASTER MEMORY
54
SOURCE LOCATION
90
READ ADDRESS
98
+1
96
SHIFT AMOUNT
100
BUFFER
102
SHIFTER
58
WRITE
59
HORIZONTAL REGISTER
104
X POSITION
108
+1
112
OR
60
62
X POSITION ADDRESS 1
116
BUFFER
56
X POSITION ADDRESS 2
118
50
MODE
122
Y POSITION ADDRESS
120
WIDTH INFORMATION
124
VERTICAL REGISTER
106
Y POSITION
110
HEIGHT & REPEATING FACTOR
126
-1
128
+1
114